# EUROPÄISCHE PATENTSCHRIFT

(11) **EP 1 060 151 B1**
(45) Veröffentlichungstag und Bekanntmachung des Hinweises auf die Patenterteilung: **04.06.2003**
(21) Anmeldenummer: 99917750.4
(22) Anmeldetag: 15.02.1999
(51) Int. Cl.: C04B 35/622, C04B 35/64

(54) **VERFAHREN ZUR HERSTELLUNG EINER ODER MEHRERER KRISTALLISIERTER KERAMISCHER DÜNNSCHICHTEN SOWIE BAUELEMENT MIT EINER SOLCHEN SCHICHT**
METHOD FOR PRODUCING ONE OR SEVERAL CRYSTALLIZED CERAMIC THIN LAYERS AND COMPONENT WITH SUCH A LAYER
PROCEDE DE PRODUCTION D'UNE OU DE PLUSIEURS COUCHES MINCES CERAMIQUES CRISTALLISEES, ET COMPOSANT POURVU D'UNE TELLE COUCHE

(30) Priorität: 16.02.1998 DE 19806013; 01.09.1998 DE 29815601 U
(43) Veröffentlichungstag der Anmeldung: 20.12.2000
(73) Patentinhaber: Forschungszentrum Jülich GmbH, 52425 Jülich (DE)
(72) Erfinder: WASER, Rainer, D-52076 Aachen (DE); HOFFMANN, Susanne, D-52072 Aachen (DE); BALDUS, Oliver, D-52074 Aachen (DE); SCHUSTER, Andreas, D-52372 Kreuzau (DE)
(86) Internationale Anmeldenummer: DE9900478
(87) Internationale Veröffentlichungsnummer: WO99041212

(56) Entgegenhaltungen:
- US-A- 5 661 092

## Beschreibung

Die Erfindung betrifft ein Verfahren zur Herstellung einer oder mehrerer kristallisierter keramischer Dünnschichten gemäß dem Oberbegriff des Anspruchs 1. Desweiteren betrifft die Erfindung ein Bauelement mit einer oder mehrerer solcher Schichten gemäß dem Oberbegriff des Anspruchs 17.

Elektrokeramische Materialien eröffnen eine Fülle von Funktionen, die die traditionellen Halbleitermaterialien wie zum Beispiel Si oder GaAs nicht bieten. Bei solchen Funktionen elektrokeramischer Materialien kann es sich um ferroelektrische Polarisation, hohe Kapazitätsdichten, magnetoresistive Eigenschaften, piezoelektrische Aktorfunktionen, piezoelektrische Sensorfunktionen, Ionenleitung, Supraleitung oder elektrooptische Aktivität handeln. Die Integration solcher elektrokeramischen Funktionen auf integrierten Halbleiterschaltungen ist wünschenswert, da auf diesem Wege eine Kombination der Funktionen mit der Mikroelektronik und Mikromechanik erzielt werden könnte. Als Beispiel sind nichtflüchtige, ferroelektrische Speicher (sogenannte Fe-RAM) vorstellbar, die auf der Integration ferroelektrischer Keramiken auf Si-CMOS-Schaltungen beruhen.

Die Erzeugung qualitativ hochwertiger, dichter Keramikschichten erfordert in der Regel Temperaturen oberhalb von 500 °C. Dies schränkt die Einsatzmöglichkeiten erheblich ein, da einerseits unter der Keramikschicht liegende Schichten oder Bauelemente wie zum Beispiel Transistoren nur mit großem Aufwand vor der Oxidation durch die erhöhte Sauerstoffdiffusionsrate geschützt werden können. Andererseits können tiefer liegende Schichten und Bauelemente durch eine Diffusion von Fremdelementen aus der Keramik degradiert werden. Schließlich muß die übliche Aluminium-Metallisierung erst nach der Keramikschicht aufgebracht werden, da diese Metallisierung nur bis zu einer Temperatur von 400 °C stabil bleibt. Aufgrund dieser Einschränkung ist es nicht möglich, fertige integrierte Schaltungen durch keramische Funktionen abschließend zu ergänzen.

Einen Weg, die Temperaturbelastung des Substrates (integrierte Halbieiterschaltung) gering zu halten und auf einen kurzen Zeitraum zu beschränken, stellt die Laser-Annealing-Technik dar. Ein fokussierter, punkt- oder strichfokusförmiger Laserstrahl ausreichender Leistung wird mit kontrollierter Vorschubgeschwindigkeit über die "grüne" Keramikschicht bewegt (Scanning), um eine Kristallisation und Verdichtung der Schicht zu erreichen.

Als Stand der Technik sind zwei Lasertypen für Annealingschritte und für die Kristallisation keramischer Dünnschichten beschrieben.
Einerseits finden nach U. Varshney et al."CO₂-laser patterning of plasma-deposited high T_{c} superconducting thick films", in J. Appl. Phys. 66/3 (1989) 1392 kontinuierlich arbeitende IR-Laser, wie zum Beispiel CO₂-Hochleistungslaser, Einsatz zur Strukturierung von Hochtemperatursupraleiter-Dickschichten.
Andererseits sind gepulste UV-Laser, insbesondere Eximer-Laser mit hohen Pulsleistungen, bekannt. Es ist aus M. Miyao, M. Tamura, and T. Tokuyama, "Selective annealing of ion-implanted amorphous layers by Nd³⁺-YAG laser irradiation", Appl. Phys. Lett. 33/8 (1978) 828 bekannt, mit Hilfe von Nd-YAG-Lasern die nach Implantationsprozessen zerstörte Oberfläche amorpher Si-Schichten auszuheilen und die implantierten Phosphoratome elektrisch zu aktivieren. Zudem ist es aus S. Otani, M. Kimura, N. Sasaki, "Laser annealing of SrTiO₃ thin films deposited directly on Si substrates at low temperature", Appl. Phys. Lett. 63/14 (1993) 1889 oder X. M. Lu et al., "Laser-induced phase transformation from amorphous to perovskite in PbZr_{0,44}Ti_{0,56}O₃ films with the substrate at room temperature", Appl. Phys. Lett. 65/16 (1994) 2015 oder X. M. Lu et al., "Pulsed eximer (KrF) laser induced crystallization of PbZr_{0,44}Ti_{0,56}O₃ amorphous films", Appl. Phys. Lett. 66/19 (1995) 2481 oder Patent Fujitsu, L16, bekannt, amorphe, elektrokeramische Dünnschichten, beispielsweise aus SrTiO₃, PbZr_{0,44}Ti_{0,56}O₃ und SrTi₁₋ₓBiₓO₃ zu kristallisieren.

Schließlich sind komplexere Prozesse als Stand der Technik in Mantese et al., "Selective laser pyrolysis of metalorganics as a method of forming patterned thin-film superconductors", Appl. Phys. Lett. 53/14 (1988) 1335 beschrieben. Dabei wurde ohne Erfolg versucht, die gewünschte keramische Dünnschicht aus metallorganischen Precursoren mit Hilfe eines Lasers in situ herzustellen. Ein ähnlicher Prozess wurde für die Herstellung ferroelektrischer Dünnschichten für den Einsatz in FNVRAM's veröffentlicht. Die Auswahl der Typen wird offenkundig von der Verfügbarkeit hinreichend hoher Laserleistungsdichten bestimmt.

US-A-566 1092 offenbart ein Verfahren zur Herstellung von dünnen Organo-Keramiken und Metalloxidfilmen. Dabei wird zunächst ein Siloxan-enthaltender Film hergestellt, wobei UV-Bestrahlung und Ozoneinwirkung eine Oxidation von Kohlenwasserstoffgruppen und Vernetzung über Sauerstoffgruppen bewirkt, die so zur Ausbildung einer keramischen Schicht führen.

Eine bedeutsame Randbedingung ergibt sich aufgrund des Absorptionsspektrums der keramischen Dünnschichten. Notwendige Voraussetzung für das optische Annealing ist die Absorption der verwendeten Strahlung in dem eingesetzten Dünnschichtmaterial. Zahlreiche Dünnschichtmaterialien, wie zum Beispiel Erdalkalititanate, absorbieren lediglich im fernen infraroten (IR) und im ultravioletten (UV)-Bereich, während sie im sichtbaren und nahen IR-Bereich vollständig transparent sind und in diesem Wellenlängenbereich nicht aufgewärmt werden können. Aus diesem Grunde müssen Strahlungsquellen im fernen Infrarot oder im UV-Bereich eingesetzt werden. Darüber hinaus wird die Kristallisation von Elektrokeramiken aus metallorganischen Solen oder Gelen durch die unterschiedliche Absorption der organischen Komponenten im ,nassen' Film und der Keramik zusätzlich erschwert. Die chemischen Reaktionen müssen durch andere Wellenlängen induziert werden als die Kristallisationsprozesse amorpher Schichten, d.h. mehrere Laserwellenlängen müssen verfügbar sein. Eine Alternative ist der Zusatz von Chromophoren zu den ,nassen' Schichten, mit deren Hilfe der Absorptionsbereich der Schicht verschoben werden kann. Ein solches Verfahren ist aufwendig und birgt zudem die Gefahr von Verunreinigungen in der Schicht.

Im einzelnen weisen die aus dem Stand der Technik bekannten Verfahren zur Bildung solcher kristallisierter Schichten folgende Nachteile auf:

Die große Wellenlänge verwendeter CO₂-Laser führt zu einer unerwünscht großen Eindringtiefe des Laserstrahls. Aufgrund des Pulsbetriebs des Excimerlasers mit extrem kurzer Pulsdauer unterhalb von 100 ns und mit der beschränkten Wiederholrate bis zu 100 Hz - und damit verbundenen, großen Zeitabschnitten zwischen den einzelnen Pulsen, - kühlt zudem der bestrahlte Oberflächenbereich nach einem Puls nahezu vollständig ab, bevor der nächste Puls folgt. Dadurch ist eine kontinuierliche, durch die Vorschubgeschwindigkeit steuerbare Eindringtiefe des Temperaturfeldes nicht erreichbar. Darüber hinaus ist die durch die Fokussierung steuerbare Energiedichte beim Einsatz des Excimerlasers begrenzt, da man unter der Ablationsschwelle des Materials bleiben muß. In beiden Fällen nachteilig sind die hohen Investitionskosten für die eingesetzten Leistungslaser. Schließlich ist die gezielte Steuerung chemischer Reaktionen beim Herstellungsverfahren kaum möglich.

Es ist deshalb Aufgabe der Erfindung ein Verfahren zur Herstellung einer oder mehrerer kristallisierter keramischer Schichten, insbesondere Dünnschichten, bereitzustellen sowie ein Bauelement mit einer solchen Schicht zu schaffen, bei dem diese Nachteile vermieden werden. Insbesondere soll die Kristallisation ohne thermische Beeinflussung der Unterlage(n) auf der diese Schicht(en) abgeschieden wurde(n), erreicht werden.

Die Aufgabe wird gelöst durch ein Verfahren gemäß der Gesamtheit der Merkmale nach Anspruch 1. Die Aufgabe wird ferner gelöst durch ein Bauelement gemäß der Gesamtheit der Merkmale nach Anspruch 17. Weitere zweckmäßige oder vorteilhafte Ausführungsformen oder Varianten finden sich in den auf jeweils einen dieser Ansprüche rückbezogenen Unteransprüchen.

Es wurde erkannt, zur Lösung der Aufgabe eine leistungsfähige Lichtquelle (Lampe) mit einem hohen Strahlungsanteil im UV-Bereich einzusetzen. Die Strahlung sollte durch geeignete Linsen (Material: z. B. Quarzglas) auf einen hinreichend kleinen Beleuchtungsfleck fokussiert werden. Zur Oberflächenkristallisation sollte dieser Beleuchtungsfleck über das vorbeschichtete Substrat gefahren ("gerastert") werden können. Die Leistungsdichte im Beleuchtungsfleck und die Vorschubgeschwindigkeit werden dabei der erwünschten maximalen Oberflächentemperatur und der gewünschten Eindringtiefe angepaßt.

Das erfindungsgemäße Verfahren erlaubt in vorteilhafter Weise eine kontinuierliche Einstrahlung von UV-Licht hinreichender Leistungsdichte. Dabei kann es vorteilhaft sein, die Wellenlänge in einem möglichst großen Wellenlängenbereich (mit hinreichender Leistungsdichte) zu wählen, um eine ausreichende Absorption während der unterschiedlichen Phasen der Schichtbildung, die mit verschiedenen chemischen Zusammensetzungen bzw. induzierten chemischen Reaktionen gekoppelt ist, zu gewährleisten. Durch Einsatz des erfindungsgemäßen Verfahrens wird eine erhebliche Kosteneinsparung aufgrund der Vermeidung des Einsatzes von Lasern erzielt.

Das erfindungsgemäße Verfahren zur Herstellung einer oder mehrerer kristallisierter keramischer Schichten, insbesondere Dünnschichten, wobei wenigstens eine keramische Schicht auf einer geeigneten Unterlage gebildet wird und mit UV-Licht bestrahlt wird, sieht gemäß Patentanspruch 1 vor, daß die Schicht mit UV-Licht kontinuierlich bestrahlt wird.

Gemäß Patentanspruch 2 wird das erfindungsgemäße Verfahren vorteilhaft ausgebildet, indem eine Energiedichte des UV-Lichtes derart gewählt wird, daß die Eindringtiefe des Lichtes die Schichtdicke der keramischen Schicht nicht überschreitet, insbesondere die Eindringtiefe des Lichtes der Schichtdicke der keramischen Schicht entspricht.

Gemäß Patentanspruch 3 wird das erfindungsgemäße Verfahren dadurch vorteilhaft ausgebildet, daß eine Lampe mit einem hohen Anteil UV-Licht, insbesondere eine Hg-, Xe- oder Hg(Xe)-Lampe, gewählt wird.

Gemäß Patentanspruch 4 wird das erfindungsgemäße Verfahren vorteilhaft dadurch ausgeführt, daß das UV-Licht mit Hilfe von Mitteln zur optischen Fokussierung auf die Oberfläche der keramischen Schicht gerichtet wird. Hierzu können insbesondere aus Quarzglas gebildete Linsen Einsatz finden.

Gemäß Patentanspruch 5 wird das erfindungsgemäße Verfahren sehr vorteilhaft ausgebildet, indem das UV-Licht über die Oberfläche der keramischen Schicht bewegt wird. Dies kann durch eine Relativbewegung der Lichtquelle zur keramischen Schicht erfolgen.

Gemäß Patentanspruch 6 wird das erfindungsgemäße Verfahren sehr vorteilhaft ausgebildet, indem ein oder mehrere Perowskite, insbesondere ferroelektrische oder dielektrische Perowskite, als Material zur Bildung der keramischen Schicht gewählt werden.

Gemäß Patentanspruch 1 wird das erfindungsgemäße Verfahren sehr vorteilhaft ausgebildet, indem ein Perowskit des Typs ABO₃ als Material für die keramische Schicht gewählt wird.

Gemäß Patentanspruch 8 wird das erfindungsgemäße Verfahren sehr vorteilhaft ausgebildet, indem ein Perowskit des Typs ABO₃ als Material für die keramische Schicht gewählt wird, wobei als A ein Element aus der Klasse Ba, Sr, Ca oder Pb gewählt wird und wobei als B ein Element aus der Klasse Ti oder Zr gewählt wird.

Gemäß Patentanspruch 9 wird das erfindungsgemäße Verfahren sehr vorteilhaft ausgebildet, indem ein Material oder mehrere Materialien der sogenannten Aurillius-Phase(n), insbesondere SrBi₂Ta₂O₉ oder SrBi₂Nb₂O₉, als Material zur Bildung der keramischen Schicht gewählt wird.

Gemäß Patentanspruch 10 wird das erfindungsgemäße Verfahren sehr vorteilhaft ausgebildet, indem die keramische Schicht auf der Oberfläche durch Abscheidung des keramischen Materials bei Temperaturen im Bereich von Raumtemperatur bis zu 400 °C gebildet wird.

Gemäß Patentanspruch 11 wird das erfindungsgemäße Verfahren sehr vorteilhaft ausgebildet, indem die keramische Schicht naßchemisch oder durch Sputtern oder mittels MOCVD gebildet wird.

Gemäß Patentanspruch 12 wird das erfindungsgemäße Verfahren sehr vorteilhaft ausgebildet, indem als Unterlage ein Substrat, insbesondere ein Halbleiter-, Polymer-, Metall- oder Glassubstrat, gewählt wird. Ohne Einschränkung der Erfindung kann jedoch als Unterlage auch ein Bauelement wie zum Beispiel ein Transistor vorgesehen sein, auf deren Oberfläche die keramische Schicht gebildet wird. Das erfindungsgemäße Verfahren ermöglicht dabei die Kristallisation der keramischen Schicht ohne thermische Beeinflussung der als Bauelement ausgebildeten Unterlage.

Gemäß Patentanspruch 13 wird das erfindungsgemäße Verfahren sehr vorteilhaft ausgebildet, indem das UV-Licht relativ zur Oberfläche der keramischen Schicht bewegt wird und zur Festlegung der gewünschten Eindringtiefe des Lichtes in die Schicht die Geschwindigkeit dieser Relativbewegung der gewählten Energiedichte des Lichtes angepaßt wird.

Gemäß Patentanspruch 14 wird das erfindungsgemäße Verfahren sehr vorteilhaft ausgebildet, indem als UV-Licht Licht mit einer Wellenlänge oder mit einem Wellenlängenintervall im Wellenlängenbereich von 100 nm bis zu 400 nm gewählt wird.

Gemäß Patentanspruch 17 wird als erfindungsgemäßes Bauelement ein optisches Bauelement, insbesondere ein ferroelektrischer Speicher vorgeschlagen, mit einer oder mehrerer nach einem der Verfahren gemäß einem der vorhergehenden Ansprüche hergestellter Schichten, die die oben genannten Vorteile aufweisen.

Die Erfindung ist im weiteren an Hand von Figuren und Ausführungsbeispielen näher erläutert. Es zeigt:
- Fig. 1:: Parameterbereich von absorbierter Leistungsdichte vs. 1/Pulsdauer für eine zur Kristallisation von z.B. BaTiO₃ erforderliche Oberflächentemperatur zwischen 800°C und 1200°C;
- Fig. 2:: Als Stand der Technik bekanntes Anwendungsbeispiel mit CO₂-Laserstrahl (Vorheizstrahl) und Nd:YAG-Laserstrahl (Annealingstrahl), wobei der Annealingstrahl ebenfalls zeilenweise gerastert wird, aber nicht so schnell wie der Vorheizstrahl.

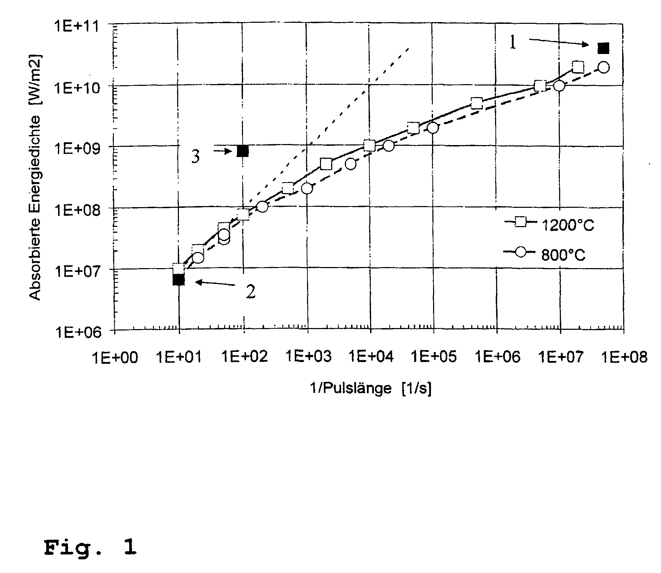

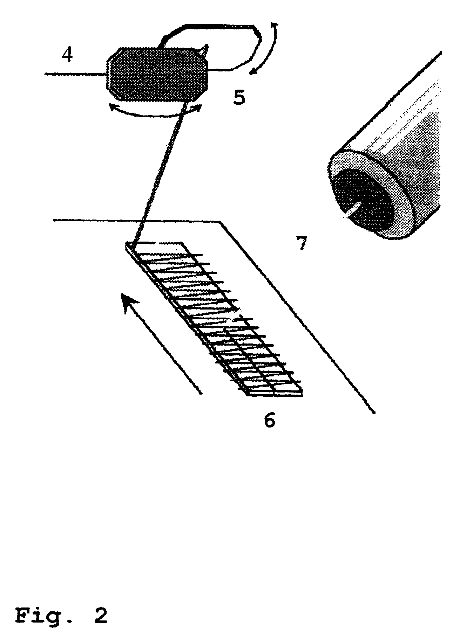

In den Figuren 1 und 2 bedeuten:
1. Excimerlaser, 1600°C, 110 nm
2. UV-Lampe, 750° C, > 0,6 mm
3. UV-Lampe (gepulst), > 1800° C
4. CO₂-Laserstrahl
5. Scannerspiegel
6. Keramik
7. Nd: YAG-Laserstrahl

### Ausführungsbeispiel

Auf einem Substrat wurde zunächst eine keramische Schicht aus SrBi₂Ta₂O₉ durch Deposition gebildet. Sodann wurde diese Schicht dem Licht einer im UV-Bereich kontinuierlich strahlenden Hg-Lampe ausgesetzt. Vor dieser Bestrahlung hatte die keramische Schicht eine Dichte von weniger als 50 % und war zunächst nur nanokristallin strukturiert. Insbesondere wies die Schicht keine Kristallite auf mit einem Durchmesser oberhalb von 2 nm. Aufgrund der Bestrahlung mit dieser UV-Lampe konnte eine Dichte von mehr als 90 %, insbesondere oberhalb von 95% erreicht werden. Zudem wurde auf diese Weise eine Kristallisation der Schicht erreicht, wobei die einzelnen Kristallite je nach Wahl der Bestrahlungsparameter einen Durchmesser im Bereich von 30 nm bis zu 200 nm oder sogar mehr aufwiesen.

Um die Gesamtfläche der Schicht derart zu behandeln, wurde das Licht der Lampe am Ort der Schichtoberfläche als geometrisch gebildet und dabei die Lampe zur Kristallisation der Schicht relativ zur Oberfläche der Schicht gescant. Die Geschwindigkeit dieser Bewegung war so eingestellt, daß unter Berücksichtigung der gewählten Energiedichte der Lichtquelle die Eindringtiefe des UV-Lichtes der Schichtdicke der keramischen Schicht entsprach. Auf diese Weise konnte eine thermische Beaufschlagung des Substrats durch in dieses Substrat eindringendes UV-Licht verhindert werden.

In Ausbildung der Erfindung ist es vorstellbar, jeweils mehrere solcher keramischer Schichten zu bilden und sodann zur Kristallisation entweder die einzelnen Schichten nacheinander oder mehrere Schichten gleichzeitig mit kontinuierlichem UV-Licht zu behandeln.

Im Rahmen der Erfindung wurde erkannt, das erfindungsgemäße Verfahren um eine Vorheizung mit Licht zu erweitern. Im einzelnen besteht die erfindungsgemäße Erweiterung darin, daß ein Vorheizen der Schicht oder der Schichten vor dem eigentlichen Kristallisationsvorgang durch ein linienweises schnelles Scannen der Oberfläche vorgeschlagen wird. Ein solches Vorheizen kann zum Beispiel mit einem CO₂-Laser oder mit UV-Licht erfolgen.

Ein solches Vorheizen weist folgende Vorteile auf:
1. Die erforderliche Temperaturdifferenz zwischen der Substrattemperatur und der Kristallisationstemperatur in der Schicht (oberhalb 500°C) wird verringert.
2. Die zum Annealen erforderliche Flächenleistungsdichte (Fluence) wird verringert. Dadurch verringert sich auch der Temperaturgradient in der Schicht.
3. Thermisch induzierte Spannungen aufgrund des verringerten Temperaturgradienten werden vermindert.
4. Mechanische Spannungen in der Schicht oder in den Schichten werden durch Einsatz der Vorheizung auf zwei Arten vorteilhaft herabsetzt:
   a) Lokal am Ort der Kristallisation durch den verringerten Temperaturgradienten,
   b) Insgesamt gesehen über den Wafer. Es wurde im Rahmen der Erfindung erkannt, daß dieser Effekt dadurch begründet ist, daß der Vorheizstrahl linienweise schnell über die Oberfläche gescannt wird. Hierdurch werden Temperaturgradienten im wesentlichen nur senkrecht zur Scanrichtung erzeugt. In Scanrichtung ergibt sich im Grenzfall des sehr schnell scannenden Strahls bei sehr geringer Leistung und damit Aufheizung pro Scan ein verschwindender Temperaturgradient in Scanrichtung. Demnach werden thermomechanische Spannungen auch nur senkrecht zur Scanrichtung in der Schicht induziert. Diese Spannungen können jedoch aufgrund der einachsigen thermischen Ausdehnung und damit möglichen Biegung des Wafers teilweise abgebaut werden. Insgesamt ist somit eine Reduzierung der thermomechanischen Spannungen bei gleichbleibender Kristallisationstemperatur erzielbar.
5. Die Kristallisationstemperatur wird aufgrund der verringerten Temperaturdifferenz bei gleicher Heizrate schneller erreicht.
6. Relativ kurze Dauer der Einwirkung der erhöhten Temperatur im Vergleich mit Dauer der Einwirkung bei Diffusionsofen oder Rapid Thermal Annealing (RTA). Dies führt zu einer deutlichen Reduzierung der thermischen Belastung des Substrates.

In Zusammenhang mit der im Rahmen der Erfindung vorgeschlagenen Maßnahme einer Vorheizung wird als Stand der Technik und die darin enthaltenen Nachteile bei Einsatz einer Vorheizung folgendes ausgeführt:

Einen Weg, die Temperaturbelastung des Substrates (integrierte Halbleiterschaltung) gering zu halten und auf einen kurzen Zeitraum zu beschränken, stellt die Laser-Annealing-Technik dar. Ein fokussierter, punkt- oder strichförmiger Laserstrahl ausreichender Leistung wird kontrollierter Vorschubgeschwindigkeit über die "grüne" Keramikschicht bewegt (Scanning), um eine Kristallisation und Verdichtung der Schicht zu erreichen.

Durch Berechnungen des Temperaturfeldes im Schichtsystem während der Kristallisation mittels der Methode der Finiten Elemente wurde der Parameterbereich von Flächenleistungsdichte und Scangeschwindigkeit ermittelt, der für die Kristallisation von BaTiO₃ geeignet ist. Die Pulsdauer und Flächenleistungsdichte, welche bei der Laser-Annealing-Technik angewendet werden, befinden sich im oberen Feld des Parameterbereiches bei kurzen Pulszeiten (entspricht hohen Scangeschwindigkeiten) und hohen Flächenleistungsdichten. Der mit derzeit verfügbaren UV-Lampen erreichbare Leistungsbereich befindet sich bei geringen Scangeschwindigkeiten und niedrigen Flächenleistungsdichten (Figur 1).

Weiterhin konnte durch Berechnungen nach der Methode der Finiten Elemente die Wärmeeindringtiefe von der Oberfläche der Schichten in das Schichtsystem (bzw. Substrat) hinein in Abhängigkeit von der Pulsdauer (bzw. Scangeschwindigkeit) ermittelt werden. Diese Berechnungen zeigen, daß der optimale Parameterbereich je nach Schichtdicke der zu kristallisierenden Schicht zwischen dem derzeit von Excimerlaser und UV-Lampen realisierbaren Bereich liegt.

Als Stand der Technik sind aus A. Ito, A. Machida, and M. Obara, Epitaxial Growth of BaTiO₃ Optical Thin Films by Pulsed KrF Laser Deposition and in situ Pulsed Laser Annealing Japanese Journal of Applied Physics, Part 2: Letters, vol. 36, pp. L805-L807, 1997 oder A. Ito, A. Machida, and M. Obara, Cobalt doping in BaTiO₃ thin films by two-target pulsed KrF laser ablation with in situ laser annealing Applied Physics Letters, vol. 70, pp. 3338-3340, 1997 epitaktische BaTiO₃-Schichten mit Dicken bis zu etwa 300 nm bekannt, die auf einem MgO-Substrat hergestellt werden.

Der Prozeß erfordert, daß die Schichten in situ durch gepulste Laserdeposition (PLD) abgeschieden werden. Die Substrattemperatur (die Temperatur, auf welche das Substrat vorgeheizt wird) kann gegenüber der gepulsten Laserdeposition von BaTiO₃-Schichten ohne in situ Laserannealen um 50 K auf 650°C gesenkt werden. Für den Prozeß ist außerdem nachteilig ein Vakuum von 40 mTorr erforderlich.

Aus O. Baldus, Reduzierung der Prozeßtemperaturen für die CSD-Abscheidung elektrokeramischer Dünnschichten mittels Laser-Annealing, Diplomarbeit in Physik, II. Physikalisches Institut Lehrstuhl B der RWTH Aachen, 1998 ist zudem als Stand der Technik bekannt, daß (Ba, Sr)TiO₃-Schichten einem PLA-Prozeß (pulsed laser annealing, Laser-Annealing-Technik mit gepulstem Laserstrahl) unterzogen und teilkristallisiert werden. Aufgrund der hohen laserinduzierten Spannungen in den Schichten wurde nachteilig Rißbildung beobachtet. Rißbildung kann die Anwendung der (Ba, Sr) TiO₃-Schichten als elektrokeramisches Bauteil stören. Weiterhin wurde gezeigt, daß durch Substratvorheizung die Neigung zu Rißbildung verringert werden kann.

Als Stand der Technik ist aus R.F. Wood and G.E. Giles, Control of melt-front velocity during pulsed laser annealing Applied Physics Letters, vol. 38, pp. 422-423, 1981 zudem bekannt, wie durch Substratvorheizung die Geschwindigkeit der Schmelzfront verringert werden kann. Die Geschwindigkeit der Schmelzfront kann sich auf die mechanischen Eigenschaften der rekristallisierten Schicht auswirken und damit auch auf die Neigung zu Rißbildung.

Insgesamt ergeben sich damit aus dem Stand der Technik eine Reihe von Nachteilen für die Herstellung und Bearbeitung von keramischen Schichten. Im einzelnen zählen dazu eine relativ geringe Temperaturwechselbeständigkeit, ein hoher Elastizitätsmodul und eine geringe Wärmeleitfähigkeit. Dieses Verhalten führt bei einer lokal sehr hohen Temperatureinwirkung zwangsläufig zu Spannungen und der daraus folgenden Rißbildung. Die Größe der entstehenden Spannungen ist unter anderem von sich ausbildenden Temperaturgradienten im Material abhängig.

Durch den räumlich eng lokalisierten Laserstrahlspot in Verbindung mit den hohen Aufheizraten (und Abkühlraten) beim Laserannealen entstehen thermomechanische Spannungen in der Schicht oder in dem Schichtsystem. Die thermomechanischen Spannungen können Rißbildung in der Schicht oder im Schichtsystem verursachen. Aufgrund von Rißbildung würde ein derartiges Bauteil durch das Auftreten eines Kurzschlusses unbrauchbar.

Aufgrund des hohen Temperaturgradienten in der Schicht ist die kristallisierbare Schichtdicke begrenzt. Einerseits nimmt bei Erhöhung der eingestrahlten Flächenleistungsdichte die Temperatur an der Oberfläche so weit zu, daß es zu Ablation und Beschädigung der Oberfläche kommt. Andererseits wird bei verringerter Flächenleistungsdichte jedoch die Schicht nicht mehr durchkristallisiert, da die Temperatur nahe am Substrat unterhalb die Kristallisationstemperatur absinkt.

Es ist deshalb zudem Aufgabe der Erfindung ein Verfahren zur Herstellung einer oder mehrerer kristallisierter keramischer Schichten, insbesondere Dünnschichten, bereitzustellen sowie ein Bauelement mit einer solchen Schicht zu schaffen, bei die thermische Belastung des Substrates während der Kristallisation der Schichten reduziert wird und das Entstehen von thermomechanischen Spannungen in der Schicht oder den Schichten vermieden wird.

Diese Aufgabe wird gelöst durch ein Verfahren gemäß der Gesamtheit der Merkmale nach Anspruch 15. Die Aufgabe wird ferner gelöst durch ein Bauelement gemäß der Gesamtheit der Merkmale nach Anspruch 17. Weitere zweckmäßige oder vorteilhafte Ausführungsformen oder Varianten finden sich in den auf jeweils einen dieser Ansprüche rückbezogenen Unteransprüchen.

Es wurde erkannt, zur Lösung dieser Aufgabe, zusätzlich zur leistungsfähigen Lichtquelle (Lampe) mit einem hohen Strahlungsanteil im UV-Bereich eine weitere leistungsfähige Lichtquelle (Lampe, Laser), im folgenden Vorheizquelle genannt, zur kurzzeitigen Vorheizung einzusetzen.

Gemäß Patentanspruch 15 wird das erfindungsgemäße Verfahren sehr vorteilhaft ausgebildet, indem vor der Kristallisation der gebildeten Schicht(en) mit kontinuierlichem UV-Licht die gebildete Schicht mit Hilfe einer weiteren Lichtquelle, insbesondere mit einem Laser oder einer weiteren Lampe, vorgeheizt wird.

Die Vorheizquelle kann linienweise schnell über die Oberfläche gescannt werden. Dazu kann eine optische Einrichtung (z. B. Drehspiegel, Scanspiegel) zusätzlich zu einem optischen Aufbau zur Strahlformung (z. B. Linsen, Spiegel, Zylinderlinsen) eingesetzt werden, wie sie in bekannter Weise bei Laserschweissen (Figur 2, Stand der Technik aus Nagel, A.-M. und Exner, H., "Rißfreies Laserschweissen von Keramik, Internet Communikation, http://www.htwm.de/~laszen/KERA_W3.HTM) verwendet wird.

Der Einsatz einer Vorheizquelle erlaubt eine sehr kurze Einwirkdauer der Wärmebelastung gegenüber anderen Verfahren zur Vorheizung wie Diffusionsofen oder RTA-Ofen. Dies wird durch die bei gleicher Heizrate kürzere Aufheizdauer aufgrund der verminderten Temperaturdifferenz zwischen Substrattemperatur und der Kristallisationstemperatur in der Schicht erzielt. Mit Hilfe des Vorheizens wird das Material so weit erwärmt, daß beim nachfolgenden Annealen die Neigung zu Rißbildung in der Schicht verringert wird.

Durch das Vorheizen verringert sich außerdem die Temperaturdifferenz, die bis zum Annealen notwendig ist. Es tritt ein flacheres Temperaturprofil auf, so daß die erzielbare Kristallisationstiefe ansteigt. Zur Kristallisation sollte der Beleuchtungsfleck des Annealingstrahls über das vorbeschichtete Substrat gefahren ("gerastert") werden. Ebenso sollte der Beleuchtungsfleck des Vorheizstrahls über das vorbeschichtete Substrat gefahren ("gerastert") werden. Dabei sollte der Vorheizstrahl deutlich schneller und öfter (mit geringerem Vorschub senkrecht zur Scanrichtung) gerastert werden, als der Beleuchtungsfleck des Annealingstrahls.

Die Flächenleistungsdichte im Beleuchtungsfleck des Vorheizstrahls und die Scangeschwindigkeit des Vorheizstrahls sind auf die gewünschte Vorheiztemperatur und die gewünschte Heizrate einzustellen. Dabei wird die Scangeschwindigkeit möglichst hoch gewählt, um eine möglichst gleichmäßige (homogene in Scanrichtung) Aufheizung der Scanlinie zu erreichen.

Die Leistungsdichte im Beleuchtungsfleck des Annealingstrahls und die Vorschubgeschwindigkeit des Annealingstrahls können auf die notwendige, maximale Oberflächentemperatur und die gewünschte Eindringtiefe optimiert werden. Dazu kann es hilfreich sein, beide Optimierungen mit Hilfe von Berechnungen nach der Methode der Finiten Elemente durchzuführen.

Es ist vorteilhaft, die Vorschubgeschwindigkeit des Vorheizstrahls (senkrecht zur Scanrichtung) gleich der Vorschubgeschwindigkeit des Annealingstrahls zu wählen.

Eine weitere Möglichkeit, den Temperaturverlauf in den Schichten zu kontrollieren, stellt die Verwendung von absorbierenden Schichten dar. Gemäß Patentanspruch 16 ist dazu vorgesehen, daß eine Schicht oder mehrere absorbierende Schichten an der freien Oberfläche aufgebracht werden oder in der zu kristallisierenden Schicht (zusätzliche Coatings) eingebracht werden.

Diese absorbierende Schichten können z.B. an der Oberfläche aufgebracht werden, um zusätzlich zur Kontrolle des Temperaturverlaufs die photolytischen Prozesse der organischen Schichten zu verhindern (Beispiel (Ba, Sr)TiO₃), welche ebenfalls zur Rißbiidung beitragen können. Andererseits können absorbierende Schichten in der Schicht (zusätzliche Coatings) eingebracht werden, um die Eindringtiefe der Strahlung und damit ebenfalls den Temperaturverlauf in den Schichten zu kontrollieren.

Hierdurch kann der Wellenlängenbereich der verwendeten Lichtquelle auch auf Bereiche ausgedehnt werden, in welchen die Schichten transparent sein können, beispielsweise der sichtbare Spektralbereich. Dadurch erweitert sich der Bereich der zur Verfügung stehenden Lichtquellen, wie zum Beispiel Ar⁺-Laserlicht.

Mit Hilfe der Vorheizung wird im Rahmen der Erfindung die Wärmeeinwirkung auf das Substrat reduziert. Es ist dabei zur Optimierung anzustreben, eine Belastung des Substrates mit möglichst niedriger Temperatur, ein möglichst kurzzeitiges Andauern der thermischen Belastung des Substrates, möglichst genaue Kontrolle der Dauer der thermischen Belastung des Substrates.

Dazu wird mit Hilfe der Vorheizung eine in der Schicht oder in den Schichten definierte Erwärmung der spannungsgefährdeten Zone gezielt einstellbar. Dies hat zur Folge, daß dadurch eine definierte Erwärmung eine Reduzierung von thermomechanischen Spannungen in den Schichten erzielt werden kann. Zudem kann durch eine genaue Überwachung der Dauer und des Verlaufs der thermischen Belastung der Schichten einer Reduzierung der thermomechanischen Spannungen möglich.

### Weiteres Ausführungsbeispiel

Es wurden Berechnungen nach der Methode der Finiten Elemente durchgeführt, um den Zusammenhang zwischen der Flächenleistungsdichte im Beleuchtungsfleck und der Scangeschwindigkeit bzw. Vorschubgeschwindigkeit einerseits und dem sich einstellenden Temperaturprofil andererseits zu ermitteln. Durch Anpassung der Parameter Flächenleistungsdichte und Vorschubgeschwindigkeit können sowohl sehr flache als auch steile Temperaturgradienten in den Schichten eingestellt werden.

Das erfindungsgemäße Verfahren mit einer Vorheizung zur Bildung der keramischen Schicht(en) weist den Vorteil auf, daß es innerhalb kurzer Zeit, insbesondere innerhalb weniger Sekunden, eine gut steuerbare Temperaturfelderzeugung erlaubt. Zudem ist die Bearbeitung unter freien Bedingungen und ohne kompliziertes Handling möglich.

Als Pulsdauer für die Vorheizung kann einen Wert zwischen dem von Excimerlaser und UV-Lampen realisierbaren Bereich, insbesondere im Bereich zwischen 10 ns und 0,1 s vorgesehen werden. Besonders günstig kann es sein, die Pulsdauer für die Kristallisation von BaTiO₃ mit 50 ns zu wählen.

## Patentansprüche

1. Verfahren zur Herstellung einer oder mehrerer kristallisierter elektrokeramischer Schichten auf einer geeigneten Unterlage, wobei zunächst wenigstens eine keramische Schicht ausgebildet und diese zur Kristallisation mit UV-Licht kontinuierlich bestrahlt wird.

2. Verfahren nach Anspruch 1, **dadurch gekennzeichnet, daß** eine Energiedichte des UV-Lichtes derart gewählt wird, daß die Eindringtiefe des Lichtes die Schichtdicke der keramischen Schicht nicht überschreitet, insbesondere die Eindringtiefe des Lichtes der Schichtdicke der keramischen Schicht entspricht.

3. Verfahren nach Anspruch 1 oder 2, **gekennzeichnet durch** eine Lampe mit einem hohen Anteil UV-Licht, insbesondere eine Hg-, Xe- oder Hg(Xe)-Lampe.

4. Verfahren nach einem der vorhergehenden Ansprüche, **dadurch gekennzeichnet, daß** das UV-Licht mit Hilfe von Mitteln zur optischen Fokussierung auf die Oberfläche der keramischen Schicht gerichtet wird.

5. Verfahren nach einem der vorhergehenden Ansprüche, **dadurch gekennzeichnet, daß** das UV-Licht über die Oberfläche der keramischen Schicht bewegt wird.

6. Verfahren nach einem der vorhergehenden Ansprüche, **gekennzeichnet durch** Wahl eines oder mehrerer Perowskite, insbesondere ferroelektrischer oder dielektrischer Perowskite, als Material zur Bildung der keramischen Schicht.

7. Verfahren nach einem der vorhergehenden Ansprüche, **dadurch gekennzeichnet, daß** ein Perowskit des Typs ABO₃ als Material für die keramische Schicht gewählt wird.

8. Verfahren nach vorhergehendem Anspruch, **dadurch gekennzeichnet, daß** ein Perowskit des Typs ABO₃ als Material für die keramische Schicht gewählt wird, wobei als A ein Element aus der Klasse Ba, Sr, Ca oder Pb gewählt wird und wobei als B ein Element aus der Klasse Ti oder Zr gewählt wird.

9. Verfahren nach einem der vorhergehenden Ansprüche, **gekennzeichnet durch** Wahl eines oder mehrerer Materialien der sogenannten Aurillius-Phase(n), insbesondere SrBi₂Ta₂O₉ oder SrBi₂Nb₂O₉, als Material zur Bildung der keramischen Schicht.

10. Verfahren nach einem der vorhergehenden Ansprüche, **dadurch gekennzeichnet, daß** die keramische Schicht auf der Oberfläche durch Abscheidung des keramischen Materials bei Temperaturen im Bereich von Raumtemperatur bis zu 400 °C gebildet wird.

11. Verfahren nach vorhergehendem Anspruch, **dadurch gekennzeichnet**, d a β die keramische Schicht naßchemisch oder durch Sputtern oder mittels MOCVD gebildet wird.

12. Verfahren nach vorhergehendem Anspruch, **dadurch gekennzeichnet, daß** als Unterlage ein Substrat, insbesondere ein Halbleiter-, Polymer-, Metall- oder Glassubstrat, gewählt wird.

13. Verfahren nach vorhergehendem Anspruch, **dadurch gekennzeichnet, daß** das UV-Licht relativ zur Oberfläche der keramischen Schicht bewegt wird und zur Festlegung der gewünschten Eindringtiefe des Lichtes in die Schicht die Geschwindigkeit dieser Relativbewegung der gewählten Energiedichte des Lichtes angepaßt wird.

14. Verfahren nach vorhergehendem Anspruch, **dadurch gekennzeichnet, daß** als UV-Licht Licht mit einer Wellenlänge oder mit einem Wellenlängenintervall im Wellenlängenbereich von 100 nm bis zu 400 nm gewählt wird.

15. Verfahren nach einem der vorhergehenden Ansprüche 1 bis 14, **dadurch gekennzeichnet, daß** vor der Kristallisation der gebildeten Schicht(en) mit kontinuierlichem UV-Licht die gebildete Schicht mit Hilfe einer weiteren Lichtquelle, insbesondere mit einem Laser oder einer weiteren Lampe, vorgeheizt wird.

16. Verfahren nach einem der vorhergehenden Ansprüche, **dadurch gekennzeichnet**, d a β eine oder mehrere absorbierende Schichten an der freien Oberfläche aufgebracht oder in der zu kristallisierenden Schicht (zusätzliche Coatings) eingebracht werden.

17. Optisches Bauelement, insbesondere ferroelektrischer Speicher, mit einer oder mehrerer nach einem der Verfahren gemäß einem der vorhergehenden Ansprüche hergestellter Schichten.

## Claims

1. Process for producing one or several crystallised electroceramic layers on a suitable base, in which first at least one ceramic layer is formed and then this is irradiated continuously with ultraviolet light until crystallisation.

2. Process according to claim 1, **characterised by** the fact that a power intensity of the ultraviolet light is chosen such that the penetration depth of the light does not exceed the thickness of the ceramic layer and in particular the depth of penetration of the light corresponds to the thickness of the ceramic layer.

3. Process according to claim 1 or 2, **characterised by** a lamp with a high proportion of ultraviolet light, particularly a Hg, Xe or Hg(Xe) lamp.

4. Process according to one of the previous claims, **characterised by** the fact that the ultraviolet light is directed onto the surface of the ceramic layer by means of optical focussing.

5. Process according to one of the previous claims, **characterised by** the fact that the ultraviolet light is moved over the surface of the ceramic layer.

6. Process according to one of the previous claims, **characterised by** the choice of one or several perovskites, particularly ferro-electric or dielectric perovskites, as the material for forming the ceramic layer.

7. Process according to one of the previous claims, **characterised by** the fact that a perovskite of the ABO₃ type is chosen as the material for the ceramic layer.

8. Process according to the previous claim, **characterised by** the fact that a perovskite of the ABO₃ type is chosen as the material for the ceramic layer, in which an element from class Ba, Sr, Ca or Pb is chosen as A and in which an element from class Ti or Zr is chosen as B.

9. Process according to one of the previous claims, **characterised by** the choice of one or several materials of the so-called Aurillius phase(s), particularly SrBi₂Ta₂O₉ or SrBi₂Nb₂O₉ as the material for forming the ceramic layer.

10. Process according to one of the previous claims, **characterised by** the fact that the ceramic layer is formed on the surface by depositing the ceramic material at temperatures in the range from room temperature to 400E C.

11. Process according to the previous claim, **characterised by** the fact that the ceramic layer is formed in a wet chemical process through sputtering or by means of organometallic chemical vapour deposition.

12. Process according to the previous claim, **characterised by** the fact that a substrate is chosen as the base, particularly a semiconductor, polymer, metal or glass substrate.

13. Process according to the previous claim, **characterised by** the fact that the ultraviolet light is moved in relation to the surface of the ceramic layer and the speed of this relative movement of the power intensity of the light chosen is adapted to establish the required depth of penetration of the light into the layer.

14. Process according to the previous claim, **characterised by** the fact that light with a wavelength or a wavelength interval in the wavelength range from 100 nm to 400 nm is chosen as the ultraviolet light.

15. Process according to one of the previous claims 1 to 14, **characterised by** the fact that the layer(s) formed before crystallisation are preheated with continuous ultraviolet light using a further light source, particularly a laser or a further lamp.

16. Process according to one of the previous claims, **characterised by** the fact that one or several absorbing layers are put on the free surface or in the layer to be crystallised (additional coatings).

17. Optical component, particularly a ferro-electric store, with one or several layers produced according to one of the processes according to one of the previous claims.

## Revendications

1. Procédé de fabrication d'une ou de plusieurs couches électrocéramiques cristallisées sur un support approprié, au moins une couche céramique étant d'abord formée et celle-ci étant irradiée en continu avec de la lumière ultraviolette pour la cristallisation.

2. Procédé selon la revendication 1, **caractérisé en ce qu'**une densité énergétique de la lumière ultraviolette est choisie de manière à ce que la profondeur de pénétration de la lumière ne dépasse pas l'épaisseur de la couche céramique, en particulier que la profondeur de pénétration de la lumière corresponde à l'épaisseur de la couche céramique.

3. Procédé selon la revendication 1 ou 2, **caractérisé par** une lampe ayant une fraction élevée de lumière ultraviolette, en particulier une lampe Hg, Xe ou Hg(Xe).

4. Procédé selon l'une quelconque des revendications précédentes, **caractérisé en ce que** la lumière ultraviolette est orientée sur la surface de la couche céramique à l'aide de moyens de focalisation optique.

5. Procédé selon l'une quelconque des revendications précédentes, **caractérisé en ce que** la lumière ultraviolette est mobile au-dessus de la surface de la couche céramique.

6. Procédé selon l'une quelconque des revendications précédentes, **caractérisé par** la sélection d'une ou de plusieurs pérovskites, en particulier de pérovskite ferroélectrique ou diélectrique, comme matériau pour la formation de la couche céramique.

7. Procédé selon l'une quelconque des revendications précédentes, **caractérisé en ce qu'**une pérovskite de type ABO₃ est choisie comme matériau pour la couche céramique.

8. Procédé selon l'une quelconque des revendications précédentes, **caractérisé en ce qu'**une pérovskite de type ABO₃ est choisie comme matériau pour la couche céramique, un élément de la catégorie Ba, Sr, Ca ou Pb étant choisi pour A et un élément de la catégorie Ti ou Zr étant choisi pour B.

9. Procédé selon l'une quelconque des revendications précédentes, **caractérisé par** la sélection d'un ou de plusieurs matériaux de la ou des phases dites d'Aurivillius, en particulier SrBi₂Ta₂O₉ ou SrBi₂Nb₂O₉, comme matériau pour la formation de la couche céramique.

10. Procédé selon l'une quelconque des revendications précédentes, **caractérisé en ce que** la couche céramique est formée sur la surface par dépôt du matériau céramique à des températures situées entre la température ambiante et allant jusqu'à 400°C.

11. Procédé selon l'une quelconque des revendications précédentes, **caractérisé en ce que** la couche céramique est formée par un procédé chimique par voie humide ou par pulvérisation ou par un procédé MOCVD.

12. Procédé selon l'une quelconque des revendications précédentes, **caractérisé en ce que** l'on choisit pour support un substrat, en particulier un substrat de semi-conducteur, de polymère, de métal ou de verre.

13. Procédé selon l'une quelconque des revendications précédentes, **caractérisé en ce que** la lumière ultraviolette est mobile par rapport à la surface de la couche céramique et **en ce que** la vitesse de ce mouvement relatif est adaptée à la densité énergétique choisie pour la détermination de la profondeur de pénétration de la lumière dans la couche.

14. Procédé selon l'une quelconque des revendications précédentes, **caractérisé en ce que** l'on choisit comme lumière ultraviolette la lumière ayant une longueur d'ondes ou d'un intervalle de longueur d'ondes situé dans la zone de longueurs d'ondes allant de 100 nm à 400 nm.

15. Procédé selon l'une quelconque des revendications précédentes 1 à 14, **caractérisé en ce que** la couche formée est préchauffée, avant sa cristallisation avec la lumière ultraviolette continue, à l'aide d'une autre source lumineuse, en particulier avec un laser ou une autre lampe.

16. Procédé selon l'une quelconque des revendications précédentes, **caractérisé en ce qu'**une ou plusieurs couches absorbantes sont déposées sur la couche libre ou incorporées à la couche à cristalliser (revêtements supplémentaires).

17. Composant optique, en particulier accumulateur ferroélectrique, ayant une ou plusieurs couches fabriquées selon l'un des procédés selon l'une quelconque des revendications précédentes.
